Europäisches Patentamt

European Patent Office

Office européen des brevets

(11) Veröffentlichungsnummer : **0 456 797 B1**

(12) **EUROPÄISCHE PATENTSCHRIFT**

(45) Veröffentlichungstag der Patentschrift :
**22.06.94 Patentblatt 94/25**

(51) Int. Cl.⁵ : **B01J 19/30,** B01D 47/14,
B01D 53/14, F28C 3/16

(21) Anmeldenummer : **91900207.1**

(22) Anmeldetag : **04.12.90**

(86) Internationale Anmeldenummer :
**PCT/EP90/02088**

(87) Internationale Veröffentlichungsnummer :
**WO 91/08048 13.06.91 Gazette 91/13**

(54) **VERFAHREN ZUR BEHANDLUNG VON GASEN.**

(30) Priorität : **05.12.89 GB 8927497**

(43) Veröffentlichungstag der Anmeldung :
**21.11.91 Patentblatt 91/47**

(45) Bekanntmachung des Hinweises auf die
Patenterteilung :
**22.06.94 Patentblatt 94/25**

(84) Benannte Vertragsstaaten :
**AT BE CH DE DK ES FR GB GR IT LI LU NL SE**

(56) Entgegenhaltungen :
**DE-A- 3 613 151**
**FR-A- 2 269 993**

(73) Patentinhaber : **VAW Aluminium AG**
**Georg-von-Boeselager-Strasse 25**
**D-53117 Bonn (DE)**
Patentinhaber : **EURO-MATIC LIMITED**
**Sinclair House, The Avenue**
**London WI3 8NT (GB)**

(72) Erfinder : **RUFF, Wolfram**
**Bleeckdamm 14**
**D-2161 Hammah (DE)**
Erfinder : **DAVIS, Howard, Paul**
**No. 2, Rutland Lodge**
**Petersham**
**Surrey (GB)**

(74) Vertreter : **Müller-Wolff, Thomas**
**HARWARDT NEUMANN,**
**Patent- und Rechtsanwälte,**
**Postfach 14 55**
**D-53704 Siegburg (DE)**

**Beschreibung**

Die Erfindung betrifft ein Verfahren zur Behandlung von Gasen, insbesondere zur Entfernung bzw. Rückgewinnung von Begleitbestandteilen in Form von Partikeln, gasförmigen Stoffen und/oder Tropfen, zum Wärmeaustausch zwischen Gasen und Flüssigkeiten und/oder zum Befeuchten von Gasen, in einem Wirbelbettwäscher mit ellipsoiden Füllkörpern, die durch das zu behandelnde Gas fluidisiert und im Gegenstrom mit einer Waschflüssigkeit beaufschlagt werden.

Ein Verfahren der eingangs genannten Art ist aus der DE-A 36 13 151 bekannt. In dem bekannten Verfahren wird zunächst der Einsatz von fluidisierten Kugeln beschrieben, die aus einem chemisch inerten Material, wie beispielsweise Polypropylen bestehen und ständig rotieren, so daß die aus dem Gas ausgewaschenen Partikel nicht an ihnen haften und so den Waschvorgang nicht blockieren oder den Druckabfall erhöhen.

In der DE-A 36 13 151 wird vorgeschlagen, anstelle von Kugeln Ellipsoide in einem Fließbettwäscher zu verwenden. Dadurch soll verhindert werden, daß die Kugeln vom Mittelpunkt des Waschturms an die Seiten bewegt werden und in der Mitte ein Loch zurückbleibt, durch das das Gas hindurchströmen kann, ohne an einem Waschvorgang teilzunehmen.

Die Ellipsoide weisen eine regelmäßige Form auf und haben einen minimalen und einen maximalen Durchmesser, wobei sich eine natürliche Wandstärkenverdickung im Bereich des größeren Durchmesser der Kugel befindet. Die Ellipsoide werden vom Gasstrom schon bei niedrigen Anströmgeschwindigkeiten von 1 m/sec fluidisiert, wobei die einzelnen Ellipsoide gerichtete Querbewegungen innerhalb des Einzelbettes ausführen und gleichzeitig um die kurze Halbachse rotieren. Die Verwendung von Hohlkörper-Ellipsoiden in Gaswäschern ist besonders vorteilhaft, weil der Flüssigkeitsfilm auf der Ellipsoid-Oberfläche durch die beschleunigte Drehbewegung häufig abreißt und durch Neubildung der Stoffaustausch aktiviert wird.

Die eigene Rotation erzeugt eine hohe Umfangsgeschwindigkeit in der Ebene der langen Halbachse. Das führt zu einer gerichteten Strömung der Waschflüssigkeit auf der Kontaktoberfläche mit intensiver Verteilung vom Rande auf benachbarte Kontaktelemente. Insgesamt wird dadurch permanent eine neu beladbare Phasengrenzfläche für den Stoffaustausch angeboten und damit die Absorptionsleistung sowie die Partikelabscheidung verbessert.

Aufgabe der vorliegenden Erfindung ist es, die beschriebenen Eigenschaften der ellipsoiden Füllkörper weiter zu verbessern und ein effizientes Verfahren zur Gaswäsche anzubieten, durch das fast alle unerwünschten, meist schädlichen Substanzen entfernt werden.

Das erfindungsgemäße Verfahren besteht darin, daß das Gas durch ein Rohr mit einem Bett aus Ellipsoiden geleitet wird, wobei die Gasgeschwindigkeit, die Gasmenge und die Flüssigkeitsmenge so aufeinander abgestimmt werden, daß die Ellipsoide fluidisiert und zu einer stark fluidisierten wirbelnden oder taumelnden Bewegung angeregt werden. Entscheidend ist dabei, daß sich ein Druckgradient im Füllkörperbett von mehr als 1500 Pa/m einstellt. Eine Waschflüssigkeit in Form von Tropfen wird durch das Ellipsoidbett entgegen der Flußrichtung der Gase geleitet, wobei die Waschflüssigkeit ständig die Oberflächen der Ellipsoide im Bett bedeckt, um dem Gas eine große Oberfläche zu bieten. Die schädlichen bzw. abzuscheidenden Substanzen gehen vom Gas in die Waschflüssigkeit über, die Waschflüssigkeit und die abgeschiedenene Substanzen werden zu Beseitigung gesammelt.

Die Gasgeschwindigkeit wird so gewählt, daß die Ellipsoide nicht aus dem durch den Gasstrom gebildeten Wirbelbett herausgetragen werden, d.h. nicht größer ist, als die Bett-Destabilisierungs-Geschwindigkeit (B.D.V). Vorzugsweise liegt die Gasgeschwindigkeit mindestens 20 % über der Mindestgeschwindigkeit zur Fluidisierung oder der "Minimum Fluidizing Velocity" (M.F.V). Unter den gewählten Bedingungen vollzieht der ellipsoide Füllkörper eine fluidisierte wankende oder taumelnde Bewegung, die durch das Vermischen des emporsteigenden, Turbulenzen aufweisenden Gasstroms und des herabströmenden Flüssigkeitsstroms verursacht wird. Genauer gesagt wirbelt das Mischen der drei Phasen im Gegenstrom die Füllkörper durcheinander, was zu sehr hohen Turbulenzniveaus führt.

Wenn die Verhältnisse der Radien (lange Achse zu kurzer Achse) richtig gewählt werden, dreht sich der ellipsoide Füllkörper im fluidisierten Zustand um seine überwiegend senkrechte Position, bezogen auf die lange Halbachse des Ellipsoids.

Beim vorliegenden Verfahren liegt das Verhältnis des minimalen Radius zum maximalen Radius der Ellipsoide zwischen 0,3 und 0,9. Ein optimales Verhältnis liegt zwischen 0,5 und 0,8. Die Ellipsoide werden vorzugsweise als vollständig geschlossene hohle und nicht als massive Körper geformt, um ihre Masse zu reduzieren. Sie bestehen vorzugsweise aus einem chemisch inerten Material wie z.B. Polypropylen.

Es ist vorteilhaft, wenn bei dem erfindungsgemäßen Verfahren das Volumenverhältnis zwischen Waschflüssigkeit und zu behandelndem Gas im Bereich von 0,001 bis 0,01 liegt.

Die für die Fluidisierung notwendige Gasgeschwindigkeit von 1,15 - 2,50 m/sec ist abhängig vom Flüssigkeit/Gas-Verhältnis, wobei bei niedrigem Flüssigkeit/Gas-Verhältnis die Gasgeschwindigkeit erhöht werden muß und umgekehrt.

Es ist zweckmäßig, die Ellipsoide in mit Öffnungen versehenen Einzelkäfigen zu halten, durch die Gas und Flüssigkeit im Gegenstrom fließen. Dies verringert das Risiko, daß Ellipsoide im Gas mitgerissen werden und aus dem Bett herausgetragen werden oder durch hoch-instabile lokal begrenzte Gasstrominstabiltät auf die Seite des Bettes gedrückt werden.

Erfindungsgemäß ist vorgesehen, daß der Druckgradient im Wirbelbett größer als 1500 Pa/m ist. Der Druckgradient wird dabei bestimmt durch den Druckabfall im Wirbelbettwäscher und ist identisch mit dem Druckverlust in den Wirbelbetten bezogen auf die Packungshöhe im Ruhezustand des Wäschers. So ist z.B. bei einem mehrstufigen Wirbelbettwäscher der gesamte Druckabfall durch die Gesamthöhe der Packungen (Summe aller Einzelbetten) zu dividieren, wobei die Höhe der Packungen im ruhenden Zustand gemessen wird. Bei einem Druckgradienten im Wirbelbett von mehr als 1500 Pa/m wird erfindungsgemäß ein hoher Stoff- und/oder Wärmeübergangskoeffizient sowie ein guter Staubabscheidegrad erzielt. Dies beruht auf intensiven Wechselwirkungen und dem guten Kontakt zwischen den Füllkörpern. In dem Maße, wie der Druckgradient über 1500 Pa/m steigt, (d.h. mit steigender Turbulenz) verbessern sich auch die Stoff- und Wärmeübergangs- sowie Partikeltransfereigenschaften des Verfahrens.

Grundsätzlich ist es möglich, das Volumenverhältnis zwischen Waschflüssigkeit und zu behandelndem Gas im Bereich zwischen 0,001 bis 0,01 zu halten. Bei einer Gasgeschwindigkeit von mehr als der M.F.V., die von dem Flüssigkeits-Gas-Verhältnis abhängt, befinden sich die Füllkörper in einem fluidisierten Zustand, wobei die Füllkörper eine zirkulierende Bewegung über den zur Verfügung stehenden Raum des Wirbelbettwäschers ausführen. Es ist jedoch wesentlich, daß der Prozeß bei einem Druckgradienten von mindestens 1500 Pa/m durchgeführt wird.

Um den Wascheffekt der Flüssigkeit zu maximieren, können mehrere Betten im Turm übereinander angeordnet werden, so daß das Gas hintereinander durch die Wirbelbetten geleitet wird, Das Verfahren kann auch darin bestehen, daß das Gas verschiedenen Waschflüssigkeiten oder Lösungsmitteln unterschiedlicher Konzentration in den einzelnen Betten ausgesetzt wird. Die Flüssigkeit, durch die das Gas gewaschen wird, wird vorzugsweise am Fuße des Turms gesammelt und so verarbeitet, daß die angereicherten Verunreinigungen abgetrennt oder zurückgewonnen werden, bevor die Flüssigkeit in den Kreislauf rückgeführt wird.

Eine vorteilhafte Verwendung des ellipsoiden Füllkörpers zum Wärmeaustausch zwischen Gas und Waschflüssigkeit besteht darin, daß bei einem Durchmesser des Wirbelbettwäschers von mindestens 0,3 m und einer Strömungsgeschwindigkeit des Gases von 1 bis 4,5 m/sec ein Volumenverhältnis von Flüssigkeit:Gas im Bereich von 0,001 bis 0,01 für einen effizienten Wärmeaustausch angewandt wird.

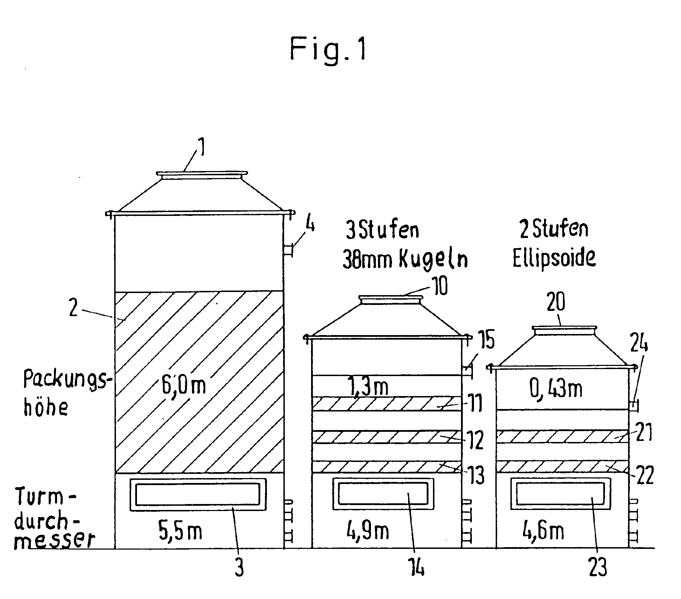

Es wird nun Bezug auf die Zeichnung (Fig. 1) genommen, die für Vergleichszwecke zwei Türme des bekannten Stands der Technik zeigt und einen Turm, in dem Ellipsoide verwendet werden und das Verfahren der Erfindung angewendet wird.

Der erste Turm 1 ist mit einer Festpackung 2, die eine Packungshöhe von 6 m aufweist, versehen. Die Festpackung besteht aus 50 mm Ringen. Der Turmdurchmesser beträgt 5,5 m. Ein zu reinigendes Gas wird am Boden des Turms durch eine Öffnung 3 eingespeist und eine Waschflüssigkeit wird am oberen Rand des Turm durch die Einlaßöffnung 4 eingespeist.

Der zweite Turm 10 hat drei Reinigungsstufen, die die 3 Betten 11, 12 und 13 umfassen. Die Betten sind jeweils mit Kugeln von 38 mm Durchmesser bestückt, die in mit Öffnungen versehenen Einzelkästen gehalten werden. Die Kästen sind waagerecht im Turm angeordnet und die gesamte Packungshöhe der drei Betten beträgt 1,3 m. Der Turmdurchmesser beträgt 4,9 m. Ein zu reinigendes Gas wird durch die Öffnung 14 eingeleitet und eine Reinigungsflüssigkeit wird durch das Rohr 15 am oberen Rand des Turms eingeführt und über Düsen gleichmäßig auf das gesamte Bett verteilt.

Der dritte Turm 20 hat nur ein 2-stufiges Reinigungselement mit den Betten 21 und 22. Diese Betten werden aus Ellipsoiden mit einem minimalen Durchmesser von 38 mm und einem maximalen Durchmesser von 50 mm gebildet. Die Höhe der einzelnen Betten im Ruhezustand beträgt 0,43 m. Der Turm weist einen Durchmesser von 4,6 m auf. Zu reinigendes Gas wird durch die Einlaßöffnung 23 eingeleitet, und die Reinigungsflüssigkeit wird bei 24 eingespeist und durch Düsen auf das Füllkörperbett gleichmäßig verteilt.

Überraschenderweise können alle Türme 1, 10 und 20 die gleiche Gasmenge bei entsprechender Gasgeschwindigkeit reinigen. Bei einem speziellen Beispiel wurden 100 000 m³ pro Stunde gereinigt. Das Gas wurde durch die entsprechenden Einlaßöffnungen 3, 14 und 23 eingeleitet und die geeignet Waschflüssigkeit in die in die jeweiligen Einlaßöffnungen 4, 15 und 24 eingespeist. Dort wurde die Waschflüssigkeit mittels Düsen auf die einzelnen Betten in Form von Tropfen gesprüht, wobei die Geschwindigkeit in den Türmen 10 und 20 so gewählt wurde, daß die Elemente des Betts, d. h. die Kugeln und Ellipsoide, in einem Fluidisierungszustand innerhalb der Kästen gehalten wurden.

Beim Eintreten des Wassers in die Betten der Waschtürme wird ein dünner Flüssigkeitsfilm auf den Füllkörpern gebildet, wodurch eine hohe Austauschfläche zwischen Gas und Flüssigkeit entsteht. Das Gas konnte

gewaschen und $H_2S$ entfernt werden. $H_2S$ wurde unter Zugabe eines geeigneten Oxidationsmittels im Wasser gelöst.

Tabelle I zeigt den Wirkungsgrad der verschiedenen Türme.

| Tabelle I | Festpackungen Turm A | 38 mm Kugeln Turm B | Ellipsoid Turm C |
|---|---|---|---|
| Wirkungsgrad % | 99,3 % | 99,3 % | 99,99 % |
| Druckabfall Pa | 1.800 | 2.050 | 1.800 |
| Druckgradient Pa/m | 300 | 1.577 | 4.100 |
| Gasgeschwindig-keit m/s | 1,2 | 1,5 | 1,7 |
| Packungshöhe m | 6,0 | 1,3 | 0,43 |
| Bettvolumen $m^3$ | 142 | 24,5 | 7,1 |
| Turmdurchmesser m | 5,5 | 4,9 | 4,6 |

Tabelle I zeigt, daß der Wirkungsgrad des Turms 20 unter Verwendung der Ellipsoide fast 100 % bei der Reinigung des Gases beträgt und höher ist als der der Türme 1 und 10. Zur Erzielung dieses hohen Wirkungsgrades ist ein ein kompakter Turm erforderlich und, wie die Zahl zeigt, weniger Füllkörper. Die Aufgabe der Füllkörper im Turm 20 besteht darin, eine wesentlich höhere Geschwindigkeit des zu behandelnden Gases zu ermöglichen. Dies bedeutet, daß die Betriebs- und Kapitalkosten geringer sind als beim Turm 1 und 10, in denen statische oder kugelförmige Füllkörper verwendet werden. Das Verfahren der vorliegenden Erfindung bietet daher wesentliche Vorteile gegenüber dem bekannten Stand der Technik.

Zieht man die in Tabelle II gegebenen Daten in Betracht, wird die Erhöhung des Wirkungsgrades deutlich.

Tabelle II

| Fluidisierungs-element | Gewicht g | wirksame Oberfläche $m^2/m^3$ | Stückzahl Beispiel | annähernde min. Fluidisierungs-geschwindigkeit |
|---|---|---|---|---|
| 38 mm Kugel | 4,5 | 102 | 553.000 | 1,14 |
| 38 mm Kugel | 6,0 | 102 | 553.000 | 1,31 |
| 50 mm Kugel | 8,0 | 78 | 245.000 | 1,15 |
| 50 mm Kugel | 10,0 | 78 | 245.000 | 1,29 |
| Ellipsoid | 8,0 | 80 | 86.000 | 1,0 |
| 38/50 mm | 7,0 | 80 | 86.000 | 1,0 |

Tabelle II zeigt, daß bei Verwendung von Ellipsoiden eine viel geringere minimale Fluidisierungsgeschwindigkeit bei der typischen Anwendung benötigt wird als dies bei Verwendung der anderen verschiedenen Größen der Fall ist. Außerdem können die Ellipsoide eine ausreichend große wirksame Oberfläche bei einem relativ geringen Gewicht und einer geringen Zahl von Elementen aufweisen. Es ist bemerkenswert, daß auf den benetzten Ellipsoiden eine sehr innige Durchmischung des Gases mit dem Flüssigkeitsfilm stattfindet der über die Ellipsoide fließt. Durch diese Mischung des Gases mit der Flüssigkeit entsteht ein Maximum an Kontakoberfläche und an Abscheideleistung.

Die Ellipsoide selbst ändern ständig ihre Orientierung gegenüber dem Fluß des Gasstromes und reiben in verschiedenen Bereichen aneinander.

Wegen ihrer Form neigen sie nicht dazu, an die Seiten des Betts gedrängt zu werden, wie dies bei den Kugeln der Fall ist. Dies bedeutet, daß der größte Stoffübergangskoeffizient erzielt werden kann. Als ein Beispiel hierfür zeigt Tabelle III die Absorption von $H_2S$ in einem Eisenchelat-Lösungsmittel bei verschiedenen Gasgeschwindigkeiten.

Generell ist jedoch eine Verwendung des ellipsoiden Füllkörpers vorgesehen für die Absorption von folgenden gasförmigen Materialien: $H_2S$, $Cl_2$, $SO_2$, $HCl$, $HF$, $NH_3$, $NO_x$ und $CO_2$, wobei die Waschflüssigkeit Wasser, oder Wasser unter Zugabe von NaOH und/oder HCl oder eine Flüssigkeit verwendet wird, in der die gasförmigen Materialien löslich oder mit der sie zumindest mischbar sind, oder zur Desorption von flüchtigen organischen Kohlenstoffen (V.O.C.s) oder anderen Chemikalien.

Tabelle III

$H_2S$ Absorption in $Fe^{3+}$ Nitrilo Acetic Acid in einem zylindrischen turbulenten Absorber mit einem Durch-

messer von 60 cm.

Tabelle IIIA

Flüssigkeitsgeschwindigkeit: 0,000589 ms$^{-1}$ (10,0 dm$^3$min$^{-1}$)
Packung: 37,5 mm Hohlkugeln

| Gasgeschwindigkeit | Stoffübergangskoeffizient |
|---|---|
| ms$^{-1}$ | Kg·mol m$^{-3}$ s$^{-1}$ Pa$^{-1}$ |
| 0,9 | 1,4x10$^{-7}$ |
| 0,9 | 1,9x10$^{-7}$ |
| 1,1 | 2,6x10$^{-7}$ |
| 1,2 | 2,7x10$^{-7}$ |
| 1,4 | 2,8x10$^{-7}$ |
| 1,5 | 2,9x10$^{-7}$ |
| 1,7 | 2,9x10$^{-7}$ |

Tabelle IIIB

Flüssigkeitsgeschwindigkeit: 0,000590 ms$^{-1}$ (10,0 dm$^3$ min$^{-1}$)
Packung: 48 mm x 35 mm Ellipsoide   Verhältnis : 0,729

| Gasgeschwindigkeit | Stoffübergangskoeffizient |
|---|---|
| ms$^{-1}$ | Kg mol m$^{-3}$ s$^{-1}$ Pa$^{-1}$ |
| 0,702 | 34,0x10$^{-7}$ |
| 1,16 | 220,79x10$^{-7}$ |
| 2,30 | 493,0x10$^{-7}$ |

Die Versuche zeigen, daß der Stoffübergangskoeffizient bei vergleichbaren Gasgeschwindigkeiten fast hundertmal höher ist als der für die Hohlkugeln. Bei noch höheren Gasgeschwindigkeiten, die mit Hohlkugen nicht mehr erreichbar sind, ist der Stoffübergangskoeffizient fast 200fach höher.

Dies zeigt, daß die Anwendung der vorliegenden Erfindung ein wesentlich effizienteres und kostengünstigeres Verfahren zur Betrieb eines Waschturm bietet, als dies bisher möglich war. Die Ellipsoide, die auch unter dem Warenzeichen "Scrubber-fill" erhältlich sind, können von den Abmessungen und Gewichten, die in den Beispielen angeführt wurden, abweichen. Das bevorzugte Verhältnis des minimalen zum maximalen Durchmesser liegt jedoch zwischen 0,5 und 0,8.

Beispiel 1 für die Entfernung von partikelförmigen Verunreinigungen aus Gasen (Staubabscheidung)

Die Höhe der Füllkörperpackung betrug 0,28 m, das Mengenverhältnis von Flüssigkeit : Gas lag in einem Bereich von 0,003 bis 0,004 dm$^3$/m$^3$. Es wurden mehr als 70 % oder mehr der teilchenförmigen Verunreinigungen mit einer Teilchengröße von mehr als 1 µm mit der Waschflüssigkeit aus dem Gas abgeschieden.

Bei einer Füllkörperpackungshöhe von 0.28 m und einem Mengenverhältnis von Flüssigkeit : Gas zwischen 0,003 bis 0,004 dm$^3$/m$^3$ wurden % oder mehr der im Gas enthaltenen teilchenförmigen Verunreinigungen mit einer Teilchengröße von weniger als 1 µm mit der Waschflüssigkeit abgeschieden.

Beispiel 2

In einem Wäscher mit 1 m Durchmesser und 0,3 m Betthöhe wurde bei einer Strömungsgeschwindigkeit der Gase von 3 m/sec und einem Volumenverhältnis von Flüssigkeit : Gas von 0,005 dm$^3$/m$^3$ der Wärmeübergangskoeffizient bestimmt. Die Anzahl der Füllkörper betrug 3000. Für den Wärmeaustausch zwischen Luft mit 6 % SO$_2$ und Wasser betrug der Wärmeübergangskoeffizient 645 354 kcal m$^{-3}$ h$^{-1}$°C$^{-1}$ und lag damit um einen Faktor von etwa 150 höher als bei einer Festbettpackung aus Pall-Ringen mit einem Durchmesser von 2 inch.
Der Druckgradient betrug 4230 Pas/m.

Beispiel 3

Ein HF-haltiges, staubbelastetes Abgas aus der Aluminium-Schmelzflußelektrolyse wurde nach dem erfindungsgemäßen Verfahren unter den folgenden Betriebsparametern mit Wasser behandelt:

```
Querschnitt des Wäschers:        7 m x 4 m = 28 m²
Betthöhe im Ruhezustand:         0.28 m
Anzahl der Stufen (beds):        4
Druckabfall:                     820 Pa


Füllkörperabmessungen:           38/50 mm Verhältnis : 0,76
Füllkörperanzahl pro Bett:       21 000 Scrubberfills
Gasgeschwindigkeit:              2,2 m/sec
Volumenverhältnis
Füssigkeit/Gas L:G =             0,004 - 0,006 = 4 - 6 dm³/m³
Druckgradient:                   ca. 2940 Pa/m
```

$$Betriebsergebnisse - HF: \quad Rohgas: \ 40 \ mg/m^3$$
$$Reingas: \ 0,4 \ mg/m^3$$
$$Abscheideleistung: \ 99\%$$

$$- Staub: \quad Rohgas: \ 200 \ mg/m^3$$
$$Reingas: \ 28 \ mg/m^3$$
$$Abscheideleistung: \ 86 \ \%$$

Unter diesen Bedingunen stellt sich ein Druckgradient von etwa 3000 Pa/m ein. Die Effizienz der HF-Absorption liegt in diesem Fall bei 99 %, wobei der abgeschiedene Staubanteil etwa 86 % beträgt.

Beispiel 4

In diesem Beispiel wurde ein $NH_3$-haltiges Abgas nach dem erfindungsgemäßen Verfahren mit Wasser bei folgenden Versuchsparametern behandelt:

| | |
|---|---|
| Bettdurchmesser: | 0,6 m |
| Betthöhe im Ruhezustand: | 0,16 m |
| Füllkörperabmessungen: | 50 x 38 mm Verhältnis : 0,76 |
| Füllkörperanzahl: | 500 Füllkörper |
| Flüssigkeitsdurchsatz: | 10 dm³ min⁻¹ |
| Volumenverhältnis Gas/Flüssigkeit: | 0,001 - 0,004 dm³/m³ |

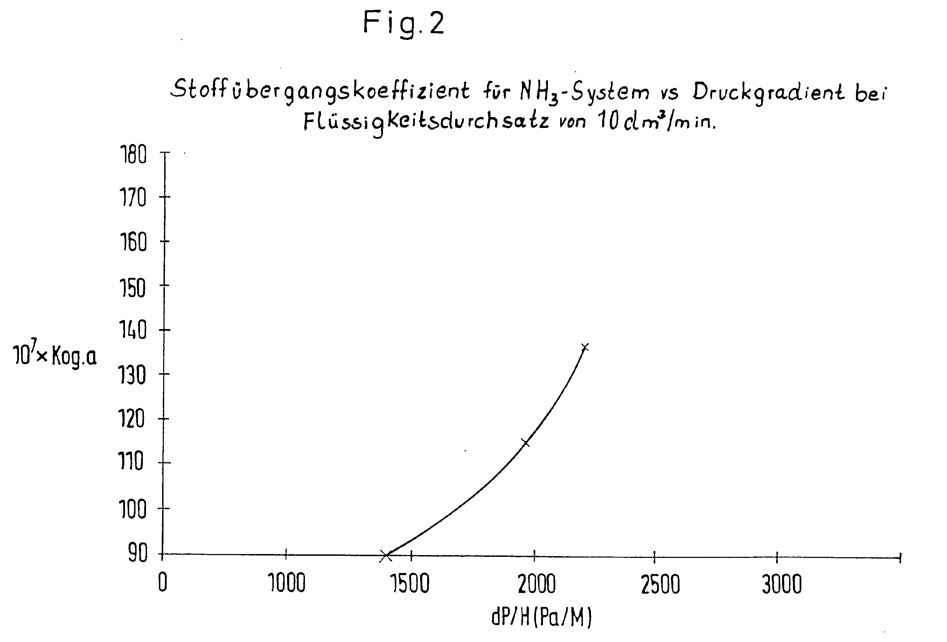

Der Stoffübergangskoeffizient für die Absorption von $NH_3$ in Wasser wurde bei verschiedenen Druckgradienten bestimmt. Fig.2 zeigt die Abhängigkeit des Stoffübergangskoeffizienten vom Druckgradienten. Oberhalb eines Druckgradienten von 1500 Pa/m ergeben sich danach sehr hohe Stoffübergangskoeffizienten, die zu einer Erhöhung der Absorptionsausbeute führen.

Beispiel 5

Ein $H_2S$-haltiges Syngas wurde mit einer Sulphanol-Lösung nach dem erfindungsgemäßen Verfahren mit den folgenden Versuchsparametern behandelt:

Querschnitt des Wäschers: 1 m
Betthöhe im Ruhezustand: 0,5 m
Anzahl der Stufen (beds): 2
Füllkörperabmessungen = 50 x 38 mm Verhältnis: 0,76
Anzahl Füllkörper pro Stufe: 1500
Gasgeschwindigkeit: 0,6 - 2,1 m/sec
Volumenverhältnis Flüssigkeit/Gas: 0,0025 - 0,008 dm³/m³

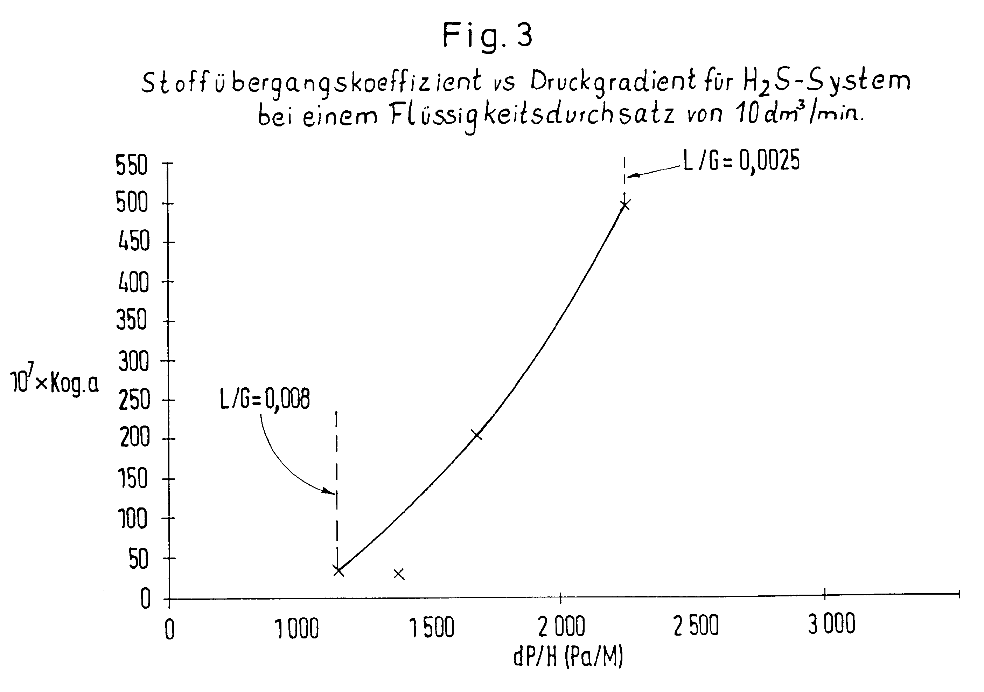

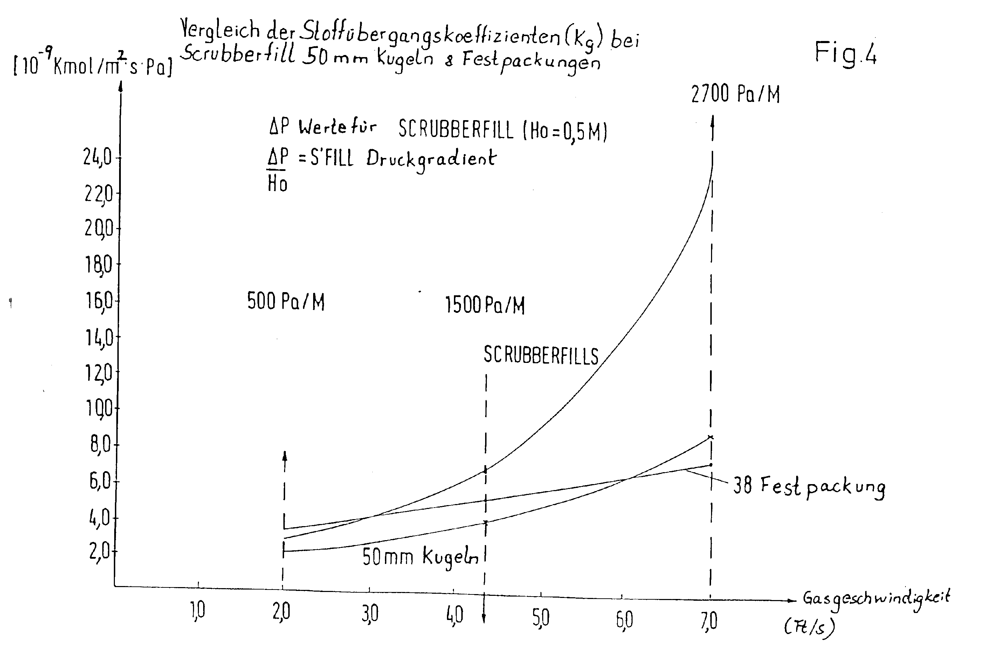

Fig. 3 zeigt die in diesem Beispiel ermittelte Abhängigkeit des Stoffübergangskoeffizienten vom Druckgradienten für einen konstanten Flüssigkeitsdurchsatz von 10 dm³min⁻¹. Oberhalb eines Druckgradienten von etwa 1500 Pa/m steigt der Stoffübergangskoeffizient steil an. Das Volumenverhältnis Flüssigkeit:Gas (L/G) sinkt dabei von 0,008 auf 0,0025 dm³/m³, bedingt durch den konstanten Flüssigkeitsdurchsatz bei ansteigender Gasgeschwindigkeit. Im Vergleich zu diesem Beispiel wurden analoge Versuche mit einer statischen Füllkörperpackung und einem Wirbelbett mit Hohlkugel ($\phi$: 20 inches) durchgeführt. Fig. 4 zeigt im Vergleich die Abhängigkeit des Stoffübergangskoeffizienten von der Gasgeschwindigkeit für die verschiedenen Verfahren. Die Stoffübergangskoeffizienten in einem Wäscher mit ellipsoiden Füllkörpern nach dem erfindungsgemäßen Verfahren liegen demnach bei höheren Gasgeschwindigkeiten deutlich über den Werten für Festpackunger und Wirbelbetten mit Hohlkugeln. Oberhalb eines Druckgradienter von etwa 1500 Pa/m, entsprechend einer Gasgeschwindigkeit in diesem Anwendungsfall von etwa 1,3 m/sec, nimmt der Stoffübergangskoeffizient für ellipsoide Füllkörper im Vergleich mit den beiden anderen Füllkörperarten überproportional zu.

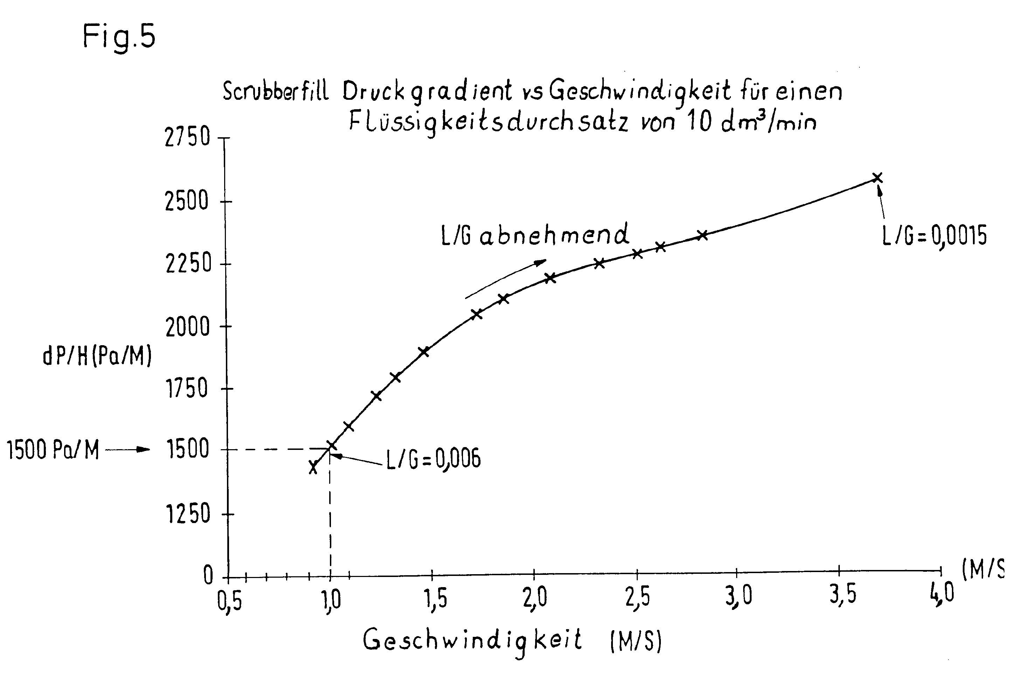

Figur 5 zeigt die Funktion Scrubberfill-Druckgradient vs. Geschwindigkeit für einen Flüssigkeitsdurchsatz von 10 dm³/min.

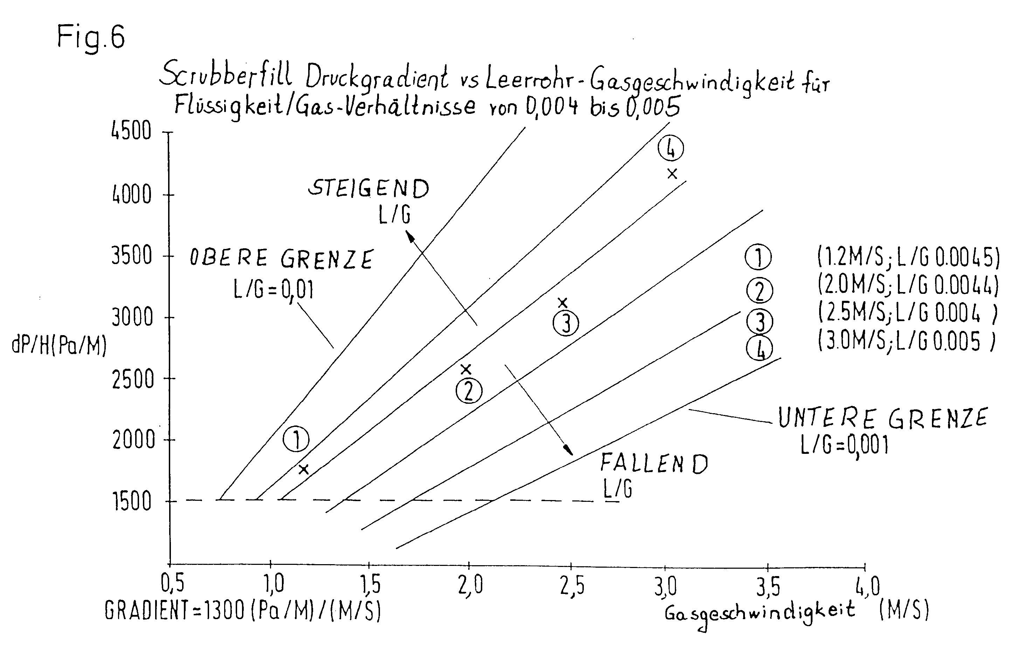

In Figur 6 ist die Funktion Scrubberfill-Druckgradient vs. Leerrohr-Gasgeschwindigkeit für Flüssigkeit/Gas-Verhälitnisse von 0,004 bis 0,005 dm³/m³ dargestellt

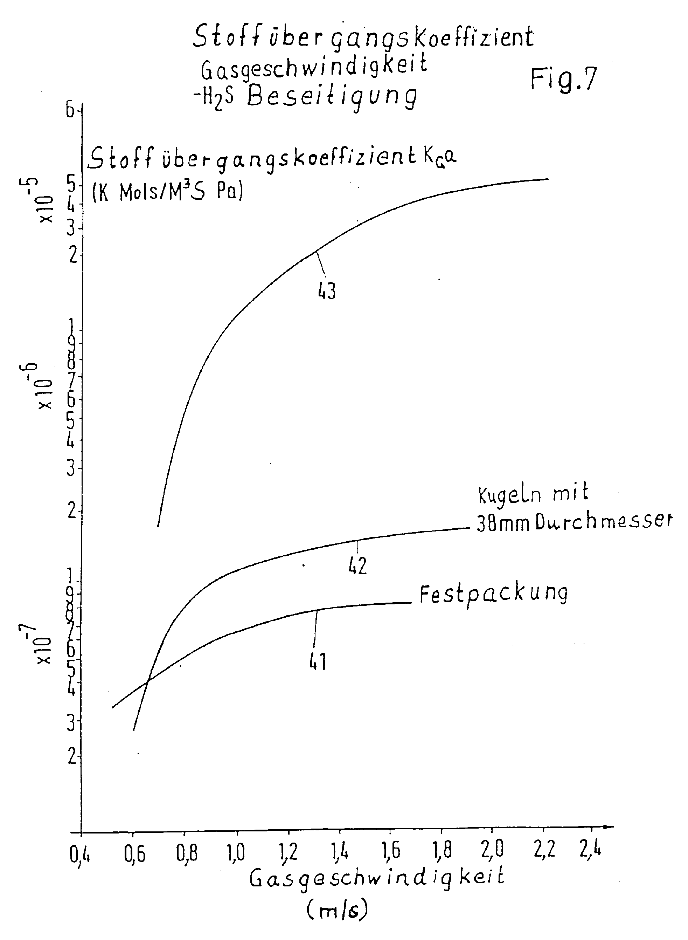

Der Verlauf des Stoffübergangskoeffizienten von verschiedenen Packungssystemen in Abhängigkeit von der Gasgeschwindigkeit bei der $H_2S$-Beseitigung ist aus Figur 7 abzulesen.

In Untersuchungen wurde festgestellt, daß das Verhältnis von Flüssigkeit zu Gas nach folgender Gleichung eingestellt werden kann:

$$L/G = K_1 \left( \frac{\dfrac{p}{H_0}}{v} \right) + K_2$$

mit

$$\frac{\Delta p}{H_0 \, v} = 1300 \quad Pa/m/m/s \quad wenn \left( \frac{L}{G} \right) = 0,004 - 0,005 \; dm^3/m^3$$

wobei mit $\frac{\Delta p}{H_0}$ ein Druckgradient bezeichnet ist und wobei v die Gasgeschwindigkeit ist.

In einem speziellen Anwendungsfall lautet die Gleichung wie folgt:

$$\frac{\Delta P}{H_0 \, v} = 4{,}77 + 1{,}8 \left( \frac{L}{G} \right)$$

wobei

p der Druckabfall in (cm)

$H_0$ die Betthöhe in (m)

v die Gasgeschwindigkeit in (m/s)

und L/G das Flüssigkeit/Gas Verhältnis in ($dm^3/m^3$) ist.

**Patentansprüche**

1.  Verfahren zur Behandlung von Gasen, insbesondere zur Entfernung bzw. Rückgewinnung von Begleitbestandteilen in Form von Partikeln, gasförmigen Stoffen und/oder Tropfen, zum Wärmeaustausch zwischen Gasen und Flüssigkeiten und/oder zum Befeuchten von Gasen, in einem Wirbelbettwäscher mit
    ellipsoiden Füllkörpern, die durch das zu behandelnde Gas fluidisiert und im Gegenstrom mit einer
    Waschflüssigkeit beaufschlagt werden,
    dadurch gekennzeichnet,
    daß der Druckgradient im Wirbelbett größer als 1500 Pa/m, bezogen auf die Packungshöhe im Ruhezustand ist, und daß die ellipsoiden Füllkörper im fluidisierten Zustand zu einer taumelnden, über den gesamten Bereich des Wirbelbettwäschers zirkulierenden Bewegung angeregt werden.

2.  Verfahren nach Anspruch 1,
    dadurch gekennzeichnet,
    daß die ellipsoiden Füllkörper im fluidisierten Zustand in überwiegend senkrechter Position bezogen auf
    die lange Halbachse des Ellipsoids zirkulieren.

3.  Verfahren nach einem der vorhergehenden Ansprüche,
    dadurch gekennzeichnet,
    daß das Volumenverhältnis zwischen Waschflüssigkeit und zu behandelndem Gas im Bereich von 0,001
    bis 0,01 liegt.

4.  Verfahren nach einem der vorhergehenden Ansprüche,
    dadurch gekennzeichnet,
    daß die für die Fluidisierung notwendige Gasgeschwindigkeit von 1,15 - 2,50 m/sec abhängig vom
    Flüssigkeits/Gas-Verhältnis ist, wobei bei niedrigem Flüssigkeits/Gas-Verhältnis die Gasgeschwindigkeit
    erhöht werden muß und umgekehrt.

5.  Verfahren nach einem der vorhergehenden Ansprüche,
    dadurch gekennzeichnet,
    daß das Verhältnis von Flüssigkeit zu Gas proportional dem Quotienten aus Druckgradient und Strömungsgeschwindigkeit ist.

6.  Verfahren nach einem der Ansprüche 1 bis 5,
    dadurch gekennzeichnet,
    daß das Verhältnis von Flüssigkeit zu Gas nach folgender Formel eingestellt wird:

$$\frac{\Delta P}{H_0 \, v} = 4{,}77 + 1{,}8 \left( \frac{L}{G} \right)$$

wobei

$\Delta$ p der Druckabfall in (Pa/cm)

$H_0$ die Betthöhe in (m)

wobei die Gasgeschwindigkeit v > 2,5 m/s beträgt und

L/G das Flüssigkeits/Gas-Verhältnis in ($dm^3/m^3$) ist.

7. Verfahren nach einem der vorhergehenden Ansprüche,
   dadurch gekennzeichnet,
   daß bei einem Volumenverhältnis Flüssigkeit/Gas zwischen 0,001 - 0,002 das Verhältnis von Druckgradient zu Gasgeschwindigkeit ca. 730 Pa/m/m/s beträgt.

8. Verfahren nach einem der vorhergehenden Ansprüche,
   dadurch gekennzeichnet,
   daß bei einem Volumenverhältnis von Flüssigkeit/Gas von 0,001 eine Mindestgasgeschwindigkeit von 1,75 m/sec eingestellt wird zur Erzielung eines fluidisierten Zustands und der fluidisierte Zustand in der Regel bei ca. 1300 Pa/m eintritt.

9. Verfahren nach einem der vorhergehenden Ansprüche,
   dadurch gekennzeichnet,
   daß bei einer Gasgeschwindigkeit von 1,15 m/s und einem Flüssigkeits/Gas-Verhältnis von 0,004 - 0,005 der Druckgradient 1500 Pa/m beträgt.

10. Verfahren nach einem der vorhergehenden Ansprüche,
    dadurch gekennzeichnet,
    daß bei einer Gasgeschwindigkeit von 1,15 m/s und einem Flüssigkeit/Gas-Verhältnis von 0,004 - 0,005 das Verhältnis von Druckgradient zu Gasgeschwindigkeit 1300 Pa/m/m/s beträgt.

11. Verfahren nach einem der vorhergehenden Ansprüche,
    dadurch gekennzeichnet,
    daß das zu behandelnde Gas folgende gasförmige Materialien enthält:
    $H_2S$, $Cl_2$, $SO_2$, HCl, HF, $NH_3$ und $CO_2$, wobei als Waschflüssigkeit Wasser, oder Wasser unter Zugabe von NaOH und/oder HCl oder eine Flüssigkeit verwendet wird, in der die gasförmigen Materialien löslich oder mit der sie zumindest mischbar sind.

12. Verfahren nach einem der vorhergehenden Ansprüche,
    dadurch gekennzeichnet,
    daß teilchenförmige Verunreinigungen aus Gasen mit einer Waschflüssigkeit entfernt werden, die bei Teilchengrößen über 1 μm mit einem Volumenverhältnis von Waschflüssigkeit:Gas im Bereich von 0,001 bis 0,003 arbeitet und bei Teilchengrößen von unter 1 μm mit einem Mengenverhältnis von Flüssigkeit:Gas im Bereich von 0,003 bis 0,01 arbeitet.

13. Verfahren nach einem der vorhergehenden Ansprüche,
    dadurch gekennzeichnet,
    daß bei einem Durchmesser des Wirbelbettwäschers von mindestens 0,3 m und einer Strömungsgeschwindigkeit des Gases von 1 bis 4,5 m/sec ein Volumenverhältnis von Flüssigkeit:Gas im Bereich von 0,001 bis 0,01 angewandt wird.

14. Verfahren nach einem der vorhergehenden Ansprüche,
    dadurch gekennzeichnet,
    daß zur Erzielung einer taumelnden Bewegung die Gasgeschwindigkeit 20 - 100 % über der maximal notwendigen Fluidisierungsgeschwindigkeit liegt, wobei das Schwerkraftzentrum jedes Füllkörpers außerhalb seines Symmetriemittelpunktes liegt.

## Claims

1. A process of treating gases, especially of removing or recovering accompanying constituents in the form of particles, gaseous substances and/or drops, of exchanging heat between gases and liquids and/or of adding moisture to gases in a fluidized bed scrubber comprising ellipsoidal packing members which are fluidized by the gas to be treated and, in the counter-current, are subjected to a scrubbing liquid, characterised in

that the pressure gradient in the fluidized bed is greater than 1500 Pa/m with reference to the packing height in the stationary condition and that, in the fluidized condition, the ellipsoidal packing members are excited to carry out a tumbling movement circulating across the entire region of the fluidized bed scrubber.

2. A process according to claim 1, characterised in

that, in the fluidized condition, the ellipsoidal packing members circulate in a predominantly vertical position with reference to the long semi-axis of the ellipsoid.

3. A process according to any one of the preceding claims, characterised in

that the volume ratio between the scrubbing liquid and the gas to be treated ranges between 0.001 and 0.01.

4. A process according to any one of the preceding claims, characterised in

that the gas velocity of 1.15 - 2.50 m/sec required for achieving a fluidized condition depends on the liquid/gas ratio, the gas velocity having to be increased when the liquid/gas ratio is low and vice versa.

5. A process according to any one of the preceding claims, characterised in

that the liquid/gas ratio is proportional to the quotient of the pressure gradient and the flow velocity.

6. A process according to any one of claims 1 to 5, characterised in

that the liquid/gas ratio is determined in accordance with the following equation:

$$\frac{\Delta P}{H_0}v = 4.77 + 1.8 \left(\frac{L}{G}\right)$$

wherein
$\Delta p$ : is the pressure drop in (Pa/cm)
$H_0$ is the bed height in (m),
wherein the gas velocity v > 2.5 m/s and
L/G is the liquid/gas ratio ($dm^3/m^3$).

7. A process according to any one of the preceding claims, characterised in

that with a liquid/gas volume ratio between 0.001 - 0.002, the ratio of pressure gradient to gas velocity is approximately 730 Pa/m/m/s.

8. A process according to any one of the preceding claims, characterised in

that with a liquid/gas volume ratio of 0.001, a minimum gas velocity of 1.75 m/sec is set in order to achieve a fluidized condition and that, as a rule, the fluidized condition occurs at approximately 1300 Pa/m.

9. A process according to any one of the preceding claims, characterised in

that with a gas velocity of 1.15 m/s and a liquid/gas ratio of 0.004 - 0.005, the pressure gradient amounts to 1500 Pa/m.

10. A process according to any one of the preceding claims, characterised in

that with a gas velocity of 1.15 m/sec and a liquid/gas ratio of 0.004 - 0.005, the ratio of pressure gradient to gas velocity amounts to 1300 Pa/m/m/s.

11. A process according to any one of the preceding claims, characterised in

that the gas to be treated contains the following gaseous materials:
$H_2S$, $Cl_2$, $SO_2$, HCl, HF, $NH_3$ and $CO_2$, and that the scrubbing liquid used is water or water with added NaOH and/or HCl or a liquid in which the gaseous materials are soluble or with which the gaseous materials, at least, may be mixed.

**12.** A process according to any one of the preceding claims, characterised in
that particulate impurities are removed from gases by means of a scrubbing liquid which, with a particle size greater than 1 μm, operates with a volume ratio of scrubbing liquid/gas in the region of 0.001 to 0.003 and, with a particle size smaller than 1 μm, operates with a quantity ratio of liquid/gas in the region of 0.003 to 0.01.

**13.** A process according to any one of the preceding claims, characterised in
that with a diameter of the fluidized bed scrubber of at least 0.3 m and with a flow velocity of the gas of 1 to 4.5 m/sec, a liquid/gas volume ratio in the region of 0.001 to 0.01 is used.

**14.** A process according to any one of the preceding claims, characterised in
that for the purpose of achieving a tumbling movement, the gas velocity exceeds the necessary maximum fluidization speed by 20 - 100% and that the centre of gravity of each packing member is located outside its centre of symmetry.


**Revendications**

**1.** Procédé pour traiter des gaz, notamment pour extraire ou récupérer des composants d'accompagnement sous la forme de particules, de matières gazeuses et/ou de gouttes, pour échanger la chaleur entre des gaz et des liquides et/ou pour humidifier des gaz, dans un laveur à bain fluidisé contenant des charges ellipsoïdales qui sont fluidisées par le gaz à traiter et qui sont sollicitées à contre-courant par un liquide laveur, caractérisé en ce que, par rapport à la hauteur de tassement à l'état de repos, le gradient de pression dans le bain fluidisé est supérieur à 1500 Pa/m, et en ce que les charges ellipsoïdales à l'état fluidisé sont excitées de manière à ce qu'elles effectuent des mouvements oscillants et parcourent toute la zone du laveur à bain fluidisé.

**2.** Procédé selon la revendication 1, caractérisé en ce que les charges ellipsoïdales à l'état fluidisé circulent principalement en position verticale par rapport au demi-axe long de l'ellipsoïde.

**3.** Procédé selon l'une des revendications précédentes, caractérisé en ce que le rapport volumétrique entre le liquide laveur et le gaz à traiter se situe entre 0,001 et 0,01.

**4.** Procédé selon l'une des revendications précédentes, caractérisé en ce que la vitesse de circulation du gaz nécessaire pour fluidiser est de 1,15 - 2,50 m/s, en fonction du rapport liquide/gaz, sachant que lorsque le rapport liquide/gaz est faible, il convient d'augmenter la vitesse de circulation du gaz, et inversement.

**5.** Procédé selon l'une des revendications précédentes, caractérisé en ce que le rapport entre le liquide et le gaz est proportionnel au quotient du gradient de pression et de la vitesse de circulation.

**6.** Procédé selon l'une des revendications 1 à 5, caractérisé en ce que le rapport entre le liquide et le gaz est établi selon la formule suivante:

$$\frac{\Delta p}{H_0 v} = 4{,}77 + 1{,}8 \left( \frac{L}{G} \right)$$

sachant que
$\Delta p$ est la chute de pression en (Pa/cm)
$H_0$ est la hauteur du bain en (m)
sachant que
la vitesse de circulation du gaz $v > 2{,}5$ m/s
et que L/G est le rapport de proportion liquide/gaz en (dm$^3$/m$^3$)

**7.** Procédé selon l'une des revendications précédentes, caractérisé en ce que pour un rapport volumétrique liquide/gaz compris entre 0,001 et 0,002, le rapport entre le gradient de pression et la vitesse de circulation du gaz est d'environ 730 Pa/m/m/s.

**8.** Procédé selon l'une des revendications précédentes, caractérisé en ce que pour un rapport volumétrique liquide/gaz de 0,001, il faut sélectionner une vitesse de circulation minimale pour le gaz de 1,75 m/s pour obtenir un état fluidisé et en ce que l'état fluidisé commence généralement à environ 1300 Pa/m.

**9.** Procédé selon l'une des revendications précédentes, caractérisé en ce que pour une vitesse de circulation du gaz de 1,15 m/s et un rapport de proportion liquide/gaz compris entre 0,004 et 0,005, le gradient de pression est de 1500 Pa/m.

**10.** Procédé selon l'une des revendications précédentes, caractérisé en ce que pour une vitesse de circulation du gaz de 1,15 m/s et un rapport de proportion liquide/gaz compris entre 0,004 et 0,005, le rapport entre le gradient de pression et la vitesse de circulation du gaz de 1300 Pa/m/m/s.

**11.** Procédé selon l'une des revendications précédentes, caractérisé en ce que le gaz à traiter contient les matières gazeuses suivantes:

$H_2S$, $Cl_2$, $SO_2$, HCl, HF, $NH_3$ et $CO_2$

sachant qu' on utilise en tant que liquide laveur de l'eau ou de l'eau avec adjonction de NaOH et/ou de HCl ou un liquide qui soit soluble dans les matières gazeuses ou pouvant au moins être mélangé à celles-ci.

**12.** Procédé selon l'une des revendications précédentes, caractérisé en ce que les impuretés en forme de particules sont extraites des gaz à l'aide d'un liquide laveur qui, pour des tailles de particules supérieures à 1 µm, fonctionne avec un rapport volumétrique liquide laveur/gaz comprise entre 0,001 et 0,003 et pour des tailles de particules inférieures à 1 µm fonctionne avec un rapport quantitatif liquide/gaz comprise entre 0,003 et 0,01.

**13.** Procédé selon l'une des revendications précédentes, caractérisé en ce que pour un diamètre du laveur à bain fluidisé d'au moins 0,3 m et une vitesse de circulation du gaz comprise entre 1 et 4,5 m/s, on utilise un rapport volumétrique liquide/gaz compris entre 0,001 et 0,01.

**14.** Procédé selon l'une des revendications précédentes, caractérisé en ce que pour obtenir un mouvement oscillant, la vitesse de circulation du gaz se situe 20 à 100% au-dessus de la vitesse de fluidisation maximale nécessaire, sachant que le centre de gravité de chaque charge se situe en dehors de son centre de symétrie.

# Fig.1

**3 Stufen**
**38mm Kugeln**

**2 Stufen**
**Ellipsoide**

1

2

4

10

15

11

12

13

20

24

21

22

Packungs-höhe

6,0 m

1,3 m

0,43 m

Turm-durch-messer

5,5 m

4,9 m

4,6 m

3

14

23

# Fig. 2

Stoffübergangskoeffizient für $NH_3$-System vs Druckgradient bei Flüssigkeitsdurchsatz von 10 dm³/min.

# Fig. 3

Stoffübergangskoeffizient vs Druckgradient für $H_2S$-System
bei einem Flüssigkeitsdurchsatz von 10 dm³/min.

Vergleich der *Stoffübergangskoeffizienten* $(K_g)$ bei *Scrubberfill 50 mm Kugeln & Festpackungen*

$[10^{-9} Kmol/m^2 s \cdot Pa]$

Fig.4

2700 Pa/M

$\Delta P$ Werte für   SCRUBBERFILL (Ho = 0,5M)

$\dfrac{\Delta P}{Ho}$ = S'FILL Druckgradient

24,0
22,0
20,0
18,0
16,0    500 Pa/M        1500 Pa/M
14,0
12,0                    SCRUBBERFILLS
10,0
8,0
6,0                                          38 Festpackung
4,0
2,0         50mm Kugeln

1,0   2,0   3,0   4,0   5,0   6,0   7,0   Gasgeschwindigkeit
(Ft/s)

EP 0 456 797 B1

# Fig.5

Scrubberfill Druckgradient vs Geschwindigkeit für einen
Flüssigkeitsdurchsatz von 10 dm³/min

L/G abnehmend

L/G=0,0015

L/G=0,006

dP/H(Pa/M)

1500 Pa/M →

Geschwindigkeit (M/S)

(M/S

EP 0 456 797 B1

Fig.6

Scrubberfill Druckgradient vs Leerrohr-Gasgeschwindigkeit für Flüssigkeit/Gas-Verhältnisse von 0,004 bis 0,005

STEIGEND L/G

OBERE GRENZE L/G=0,01

dP/H(Pa/M)

FALLEND L/G

UNTERE GRENZE L/G=0,001

(1.2M/S; L/G 0.0045)
(2.0M/S; L/G 0.0044)
(2.5M/S; L/G 0.004 )
(3.0M/S; L/G 0.005 )

GRADIENT=1300 (Pa/M)/(M/S)

Gasgeschwindigkeit (M/S)

EP 0 456 797 B1

Fig.7

Stoffübergangskoeffizient
Gasgeschwindigkeit
-H$_2$S Beseitigung

Stoffübergangskoeffizient K$_G$a
(K Mols/M$^3$S Pa)

Gasgeschwindigkeit
(m/s)